# EUROPEAN PATENT APPLICATION

(11) **EP 0 549 512 A1**
(43) Date of publication of application: **30.06.1993**
(21) Application number: 92500109.1
(22) Date of filing: 21.08.1992
(51) Int. Cl.: E06B 3/66, E06B 3/02, B44F 1/06

(54) **A transparent door with a wear-proof replaceable decoration**

(30) Priority: 17.12.1991 ES 9103783 U
(71) Applicant: Louro Thomas, Inmaculada, E-15004 La Coruna (ES)
(72) Inventor: Louro Thomas, Inmaculada, E-15004 La Coruna (ES)
(74) Representative: Naranjo Marcos, Maria Antonia

(57) **Abstract**

A transparent door (1) comprising two vacuum-linked, flat, symmetrical, parallel transparent planes. In the intermediate space, a decorative element (5) is fixed on one of the planes, in relief, or painted or printed directly on said plane. The door has hinges (6). Its notable feature is its visibility to the user.

## Description

This Model of Utility refers to a transparent door with a wearproof replaceable decorative element, wherein said door has a central decoration of a highly varied nature which may in addition be substituted whenever required.

Transparent doors generally used in industry and the like have the major drawback that they lack decorative value and, with certain frequency, a distracted user may not see them with the consequent risk of accidents.

The purpose of this model is to provide a highly variable decorative value which attracts the user's attention so that the door will under no circumstances go unseen, thereby preventing possible accidents.

This model is intended to design a door formed by two parallel panels, duly sealed together, with a free space between them where decorative elements may be placed, such as those listed by way of illustration only and without limitation, as follows:
- lyophilized flowers, made of fabric or the like.
- a central mirror framed with a figure carved in wood, or a plaster figure, according to the user's requirements.
- a straw basket with dried flowers.
- upholstered to match the fabric used in the central bedroom.
- painting in acrylic oil, watercolour, as required.
- worked gold strip.
- worked silver strip.
- mother-of-pearl, bird and human figures.
- marble, bird and human figures (and china lacquer).
- lacework of all types.
- china porcelain.
- silk-screen prints.

With these decorative elements placed between two sealed transparent panels, external agents such as water or dust have no access to the decorative element which is fully protected and safe from damage and wear.

On the other hand, when it is wished to substitute or change the decorative element, the two panels can be separated, the element changed, and the panels resealed.

For a better grasp of these Specifications, the attached drawings are included to give one possible design, given without limitation, of the subject of this invention, in which:

Figure 1 is a vertical view of the door.

Figure 2 is a horizontal cut through the door.

Figure 3 is a frontal view of the frame.

Figure 4 is a detail of the central panel of the door, with its internal decorative element.

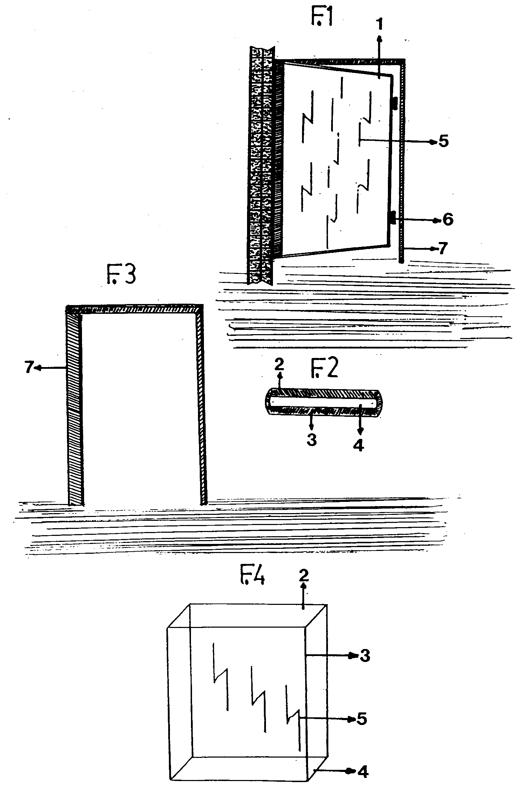

According to these drawings, the door, 1, is made up of two transparent parallel planes, 2 and 3, duly joined together to form a single body although, between the two said planes, there is a space, 4, in which to fix the desired decorative element, 5, if necessary using any of the usual means, to one or both of the insides of the panels.

The door has springs, 6, for fitting to the frame, 7, which should preferably be metallic.

Finally, following the description given, it remains only to be pointed out that any possible design variations are possible with this invention, which do not alter the essence of what is described, and the subject hereof can be made in any shape, size and material, without limitation.

## Claims

1. "A transparent door with a wearproof replaceable decoration" wherein said door is made up of two identical, symmetrical, parallel planes, joined together by vacuum and subsequently sealed around the edge so that a space is formed between them in which to fix a decorative element on to the inside of one of said planes, the door being fitted with springs for mounting on a frame which ought, for preference, to be metallic.

2. "A transparent door with a wearproof replaceable decoration" wherein the decorative element may be in relief, and may be placed on the inside of the transparent panels by any of the usual means.

3. "A transparent door with a wearproof replaceable decoration" as set forth in claim 1, wherein the decorative element is painted or screen-printed onto the inside of one of the transparent panels.
